# EUROPÄISCHE PATENTANMELDUNG

(11) **EP 3 476 903 A1**
(43) Veröffentlichungstag der Anmeldung: **01.05.2019**
(21) Anmeldenummer: 18201970.3
(22) Anmeldetag: 23.10.2018
(51) Int. Cl.: C09D 5/00

(54) **FROSTSCHUTZMITTEL**

(30) Priorität: 24.10.2017 DE 102017218998
(71) Anmelder: Aqua-Concept Gesellschaft für Wasserbehandlung mbH, 82166 Gräfelfing (DE)
(72) Erfinder: PORADA, Thomas, 81377 München (DE)
(74) Vertreter: Hoefer & Partner Patentanwälte mbB

(57) **Zusammenfassung**

Die Erfindung betrifft ein Frostschutzmittel enthaltend: Bernsteinsäure, Benzotriazol und KOH, wobei ein pH-Wert des Frostschutzmittels 10,4 bis 10,8 beträgt. Ferner betrifft die Erfindung auch ein Frostschutzmittel, das Bernsteinsäure, Zimtsäure Benzotriazol und KOH enthält und einen pH-Wert von 8,5 bis 10,8 aufweist.

## Beschreibung

Die Erfindung betrifft ein Frostschutzmittel, das sich neben einem sehr guten Frostschutz auch durch einen hervorragenden Korrosionsschutz auszeichnet.

Aus dem Stand der Technik sind Frostschutzmittel oder Gefrierschutzmittel bekannt, die insbesondere in Kühlsystemen für Verbrennungsmotoren Anwendung finden. Hierbei ist es insbesondere notwendig, dass, aufgrund der meist metallbasierten Rohrleitungen der Kühlsysteme, das Frostschutzmittel auch einen Korrosionsschutz aufweist. So beschreibt beispielsweise EP 0 863 960 B2 ein Kühl- bzw. Wärmeübertragungsmittel auf wässrigalkoholischer Basis mit integriertem Korrosionsschutz für Anlagen aus Leichtmetallen, Schwermetallen und/oder Buntmetallen. Als wesentlich wird hierbei eine Kombination einer spezifischen verzweigten aliphatischen Carbonsäure, Tolyltriazol, Benzotriazol und einem flüssigen wässrig-alkoholischen Lösungsmittel angesehen. Nachteilig an den bekannten Frostschutzmitteln ist, dass ein hoher Frostschutz bei gleichzeitig sehr gutem Korrosionsschutz für alle gängigen Metalle, und insbesondere für Lot, nicht ausreichend, und insbesondere nur durch hohe Konzentrationen an Wirkstoffen wie Tolyltriazol und Benzotriazol, die meist in Kombination eingesetzt werden, erzielt werden kann.

Ausgehend von diesem Stand der Technik ist es eine Aufgabe der Erfindung ein wirksames, und umweltfreundliches Frostschutzmittel mit sehr gutem Korrosionsschutz gegenüber den gängigen Metallen, und insbesondere auch gegenüber Lot, bereitzustellen.

Die Lösung dieser Aufgabe erfolgt durch den Gegenstand des Anspruches 1. Das erfindungsgemäße Frostschutzmittel, das entweder Bernsteinsäure, Benzotriazol und Kaliumhydroxid (KOH) enthält und einen pH-Wert von 10,4 bis 10,8 aufweist, oder das Bernsteinsäure, Zimtsäure, Benzotriazol und KOH enthält und einen pH-Wert von 8,5 bis 10,8 aufweist, zeichnet sich durch einen Frostschutz von mindestens -5 °C aus und zeigt zudem eine hohe Korrosionsschutzwirkung für alle gängigen Metalle, also Leichtmetalle, Eisenmetalle, Aluminium, Schwermetalle und Buntmetalle, wobei insbesondere ein Korrosionsschutz für Lot gegenüber herkömmlichen Frostschutzmitteln deutlich verbessert ist. Das erfindungsgemäße Frostschutzmittel eignet sich daher insbesondere zur Anwendung in Systemen, die Metalle umfassen, wie z.B. Aluminium, Kupfer, Messing, Grauguss, Stahl und natürlich Lot. Der Abtrag des oder der Metalle, die in Kontakt mit dem erfindungsgemäßen Frostschutzmittel gelangen, ist deutlich reduziert und liegt weit unter den durch ASTM D-3306 aus dem Jahre 2014 vorgegebenen Werten. Hierdurch ist das erfindungsgemäße Frostschutzmittel bei ausgezeichnetem Korrosionsschutz besonders effizient.

Das hierbei verwendete KOH liegt, sofern nichts anderes angegeben ist, in Form eine wässrigen, 45 Masse%-igen Lösung vor.

Überraschend wurde gefunden, dass sich eine Kombination von Bernsteinsäure, Benzotriazol und KOH in einem pH-Bereich zwischen 10,4 und 10,8 durch synergistische Effekte im Hinblick auf einen guten Frostschutz bei sehr guter korrosionsinhibierender Wirkung auszeichnet. Bei niedrigeren pH-Werten, insbesondere unterhalb von pH 10, kann insbesondere keine Verbesserung im Hinblick auf einen Korrosionsschutz für Lot erzielt werden. Der Abtrag von Lot bei Verwendung eines Forstschutzmittels mit den oben genannten Komponenten aber mit einem pH-Wert unterhalb von 10,4, ist sehr hoch. Ein pH-Wert von mehr als 10,8 bewirkt zudem keine weitere Verbesserung entweder des Frostschutzes oder des Korrosionsschutzes und ist zudem nachteilig im Umgang mit dem Frostschutzmittel, da Frostschutzmittel mit derart hohen pH-Werten stark ätzend wirken.

Ohne an die Theorie gebunden zu sein wird angenommen, dass die Bernsteinsäure in dem erfindungsgemäßen Frostschutzmittel mit der 45 Masse%-igen wässrigen KOH-Lösung unter Deprotonierung reagiert und hierdurch zusammen mit dem Benzotriazol ein sehr guter Frostschutz bei hohem Korrosionsschutz für alle gängigen Metalle generiert wird. Die deprotonierende Wirkung von KOH ist hierbei besonders hoch. Andere Basen, wie z.B. auch NaOH, haben nicht zu denselben guten Effekten des erfindungsgemäßen Frostschutzmittels geführt. Hierzu ist es aber essentiell, dass der pH-Wert des Frostschutzmittels auf 10,4 bis 10,8 eingestellt ist.

Gemäß einem alternativen Aspekt der vorliegenden Erfindung umfasst das erfindungsgemäße Frostschutzmittel neben Bernsteinsäure, Benzotriazol und KOH (wässrige 45 Masse%-ige Lösung) Zimtsäure. Hierdurch ergibt sich neben den oben genannten vorteilhaften Effekten ein weiterer zusätzlicher vorteilhafter Effekt: Durch den Zusatz von Zimtsäure kann über einen weiteren pH-Bereich des Frostschutzmittels, nämlich von 8,4 bis 10,8, der vorstehend erwähnte exzellente Frostschutz in Kombination mit einem sehr guten Korrosionsschutz für alle gängigen Metalle, und hierunter insbesondere für Lot, erzielt werden. Auch diese zweite Zusammensetzung wirkt hinsichtlich des Frostschutzes und des Korrosionsschutzes synergistisch und ermöglicht zudem eine Absenkung des pH-Wertes, ohne die positiven Effekte wesentlich zu reduzieren. Hierdurch kann dieses erfindungsgemäße Frostschutzmittel besonders anwendungssicher und umweltschonend bereitgestellt werden.

Das erfindungsgemäße Frostschutzmittel kann neben den angegebenen Komponenten weitere übliche Additive enthalten, wie z.B. Farbstoffe und dergleichen.

Die Unteransprüche beinhalten vorteilhafte Weiterbildungen und Ausgestaltungen der Erfindung.

Gemäß einer vorteilhaften Weiterbildung enthält das Frostschutzmittel Bernsteinsäure, Zimtsäure, Benzotriazol und KOH und hat einen pH-Wert von 10,4 bis 10,8. Durch diese synergistische Kombination an Komponenten und einen relativ hohen pH-Wert von mindestens 10,4, ist es möglich, eine Konzentration der Zimtsäure zu reduzieren, so dass nicht nur die Kosten des Frostschutzmittels gesenkt, sondern auch die Herstellung des Frostschutzmittels erleichtert werden kann. Ein pH-Wert von mehr als 10,8 zeigt hingegen keine weiteren wesentlichen positiven Effekte und ist zudem im Hinblick auf die Anwendersicherheit und den Umweltschutz weniger bevorzugt. Es lassen sich beispielsweise vergleichbare Effekte in Bezug auf einen Frostschutz mit kombiniertem Korrosionsschutz für nachfolgende Zusammensetzungen erzielen:
Eine erste Zusammensetzung enthält Bernsteinsäure, Benzotriazol und Zimtsäure, wobei die erste Zusammensetzung einen pH-Wert von etwa 8,6 aufweist.
Eine zweite Zusammensetzung enthält Bernsteinsäure, Benzotriazol und Zimtsäure, wobei die zweite Zusammensetzung einen pH-Wert von etwa 10,4 bis 10,8 aufweist.

In der ersten und der zweiten Zusammensetzung sind die Massenanteile an Bernsteinsäure und Benzotriazol identisch. Abweichungen sind lediglich aufgrund der unterschiedlichen pH-Werte für die Massenanteile an KOH vorhanden. Zudem ist in der zweiten Zusammensetzung der Massenanteil an Zimtsäure im Vergleich zu dem Massenanteil an Zimtsäure in der ersten Zusammensetzung um 80 % reduziert. Die Reduktion des Gehaltes an Zimtsäure hat keinen wesentlichen negativen Effekt auf den Frostschutz und/oder den Korrosionsschutz des Frostschutzmittels.

Weiter bevorzugt beträgt ein Massenanteil an Bernsteinsäure, bezogen auf die Gesamtmasse des Frostschutzmittels, 10 bis 31 %. Ein Massenanteil von 10 bis 31 % an Bernsteinsäure ermöglicht eine variable Einstellung des Frostschutzes des Frostschutzmittels auf einen Bereich zwischen -5 °C und -50 °C. Je höher hierbei der Massenanteil an Bernsteinsäure ist, desto tiefere Temperaturen können für den Frostschutz erzielt werden. Ab Massenanteilen der Bernsteinsäure von mehr als 31 % ist allerdings keine weitere wesentliche Steigerung des Frostschutzes feststellbar. Dies scheint darauf zurückzuführen zu sein, dass die Bernsteinsäure sodann nicht mehr ausreichend deprotoniert vorliegt und dadurch ihre Wirkung auf den Frostschutz begrenzt wird.

Aus dem für die vorstehende vorteilhafte Weiterbildung offenbarten Grund, ist es ferner vorteilhaft, wenn ein Stoffmengenverhältnis von Bernsteinsäure zu KOH mindestens 1 : 2 beträgt. Hierdurch kann besonders gut gesichert werden, dass die Bernsteinsäure zu einem hohen Prozentsatz und insbesondere vollständig, in ihrer deprotonierten Form vorliegt, was besonders effizient im Hinblick auf eine Temperaturabsenkung des Frostschutzes ist. Ein Stoffmengenverhältnis von Bernsteinsäure zu KOH von mindestens 1 : 2 bedeutet hierbei, dass die Stoffmenge von KOH auch mehr als doppelt so groß sein kann wie die Stoffmenge der Bernsteinsäure. Vorteilhafterweise beträgt das Stoffmengenverhältnis von Bernsteinsäure zu KOH maximal 1 : 2,1. Auf diese Weise kann der pH-Wert des Frostschutzmittels so niedrig wie möglich gehalten werden.

Ein Massenverhältnis von Zimtsäure zu Benzotriazol von 1,5 : 1 bis 9 : 1 ist ferner im Hinblick auf eine sehr gute Korrosionsschutzwirkung, insbesondere auch im Lichte eines Korrosionsschutzes von Lot, bevorzugt. Sehr geringe Anteile an Benzotriazol sind hierbei insbesondere aus Umweltschutzgründen vorteilhaft, da aromatische Di- und Triazole als u.a. umweltgefährdend eingestuft sind. Um dennoch eine sehr hohe antikorrosive Wirkung im Frostschutzmittel bereitzustellen, kann vorteilhafterweise der Massenanteil an Zimtsäure gemäß dem vorstehenden Massenverhältnis angehoben werden. Zu hohe Massenanteile an Zimtsäure sind jedoch schwierig in das Frostschutzmittel einzuformulieren, so dass ein Massenverhältnis von Zimtsäure zu Benzotriazol von 9 : 1 vorteilhafterweise nicht überschritten werden sollte.

Wie bereits vorstehend erwähnt, sind hohe Massenanteile an Benzotriazol nachteilig im Hinblick auf die Umweltverträglichkeit des Frostschutzmittels. Durch einen möglichst geringen Anteil an Benzotriazol kann daher die Marktakzeptanz des Frostschutzmittels verbessert werden. Gemäß einer weiteren vorteilhaften Weiterbildung ist daher vorgesehen, dass ein Massenanteil an Benzotriazol, bezogen auf die Gesamtmasse des Frostschutzmittels, weniger als 0,1 % beträgt. Hierbei hat sich ein Massenanteil von 0,05 % bei guter Korrosionsschutzwirkung als besonders gut kompatibel mit der Umwelt herausgestellt.

Zur Verbesserung der Korrosionsschutzwirkung des Frostschutzmittels, insbesondere im Hinblick auf Lot, beträgt ein Massenanteil an Zimtsäure, bezogen auf die Gesamtmasse des Frostschutzmittels, vorzugsweise 0,05 % bis 0,6 % und insbesondere 0,07 % bis 0,5 %. Der angegebene Maximalwert von 0,6 % ist hierbei besonders bevorzugt, um die Herstellung und die Verarbeitbarkeit des Frostschutzmittels zu erleichtern, da die Zimtsäure in einem Konzentrationsbereich von 0,05 % bis 0,6 % eine besonders geringe Neigung zum Ausfallen aus dem Frostschutzmittel zeigt und daher ihre maximale Wirkung entfalten kann. Massenanteile von weniger als 0,07 % und insbesondere von weniger als 0,05 % ergeben hingegen keine gute Korrosionsschutzwirkung von Lot.

Aus Gründen der sehr guten Verarbeitbarkeit und der hohen Lagerstabilität ist es weiterhin bevorzugt, wenn ein Frostschutz des Frostschutzmittels -5 °C bis -50 °C, insbesondere -10 °C bis -29 °C, beträgt. Eine geeignete Temperatur für den Frostschutz kann hierbei insbesondere durch eine Anpassung des Massenanteils von Bernsteinsäure herbeigeführt werden. Ein Frostschutz von weniger als -50 °C wäre nur schwierig, und wenn dann nur unter deutlicher weiterer Anhebung des pH-Wertes möglich, und ist deshalb weniger stark bevorzugt.

Ebenfalls aus Gründen der Umweltverträglichkeit und auch der Anwendersicherheit enthält das Frostschutzmittel als Lösungsmittel Wasser, das insbesondere in Form von vollentsalztem Wasser zur Anwendung kommt. Hierbei ist es weiterhin bevorzugt, wenn ein Massenanteil des Wassers, bezogen auf die Gesamtmasse des Frostschutzmittels, 20 % bis 50 % beträgt. Das Frostschutzmittel ist hierdurch besonders gut handelbar.

Weiter bevorzugt ist es, dass das Frostschutzmittel frei ist von einwertigen und mehrwertigen Alkoholen. Einwertige und mehrwertige Alkohole, wie z.B. Glykole und Glycerin, werden herkömmlicherweise zur Absenkung der Frostschutztemperatur eingesetzt. Dies ist aber zum einen aufgrund der erfindungsgemäß verwendeten Bernsteinsäure nicht notwendig, und zum anderen auch aus Gründen der Anwendersicherheit und der Umweltverträglichkeit, und auch im Hinblick auf die Kosten des Frostschutzmittels, nicht bevorzugt.

Ein weiter bevorzugtes Frostschutzmittel enthält neben Wasser, das vorzugsweise in Form von vollentsalztem Wasser vorliegt: 15 bis 20 Masse% und insbesondere 18,5 % Masse% Bernsteinsäure, 0,3 bis 0,7 Masse% und insbesondere 0,05 Masse% Benzotriazol und 37 bis 41 Masse% und insbesondere 39,3 Masse% KOH. Der pH-Wert dieses Frostschutzmittels beträgt 10,5 bis 10,7 und ist insbesondere 10,5. Das Frostschutzmittel kann weitere übliche Additive enthalten. Aufgrund der sehr guten synergistischen Wirkung der angegebenen Komponenten ist es jedoch ferner bevorzugt, wenn neben den vorstehenden Komponenten keine weiteren Additive und Komponenten enthalten sind, so dass die vorstehende Zusammensetzung als abschließend anzusehen ist.

Ein ebenfalls bevorzugtes Frostschutzmittel enthält neben Wasser, das vorteilhafterweise in Form von vollentsalztem Wasser zur Anwendung kommt: 15 bis 20 Masse% und insbesondere 18,5 % Masse% Bernsteinsäure, 0,3 bis 0,7 Masse% und insbesondere 0,05 Masse% Benzotriazol, 38 bis 43 Masse% und insbesondere 41,8 Masse% KOH und 0,05 bis 0,6 Masse% und insbesondere 0,44 Masse% Zimtsäure. Ein pH-Wert dieses Frostschutzmittels beträgt hierbei 10,5 bis 10,7 und liegt insbesondere bei 10,7. Das Frostschutzmittel kann weitere übliche Additive enthalten. Aufgrund der sehr guten synergistischen Wirkung der angegebenen Komponenten ist es jedoch auch hier ferner bevorzugt, wenn neben den vorstehenden Komponenten keine weiteren Additive und Komponenten enthalten sind, so dass die vorstehende Zusammensetzung als abschließend anzusehen ist.

Die beiden vorstehend konkret definierten Frostschutzmittel zeichnen sich durch eine besonders gute korrosionsinhibierende Wirkung aller gängigen Metalle und insbesondere von Lot, bei sehr hohem Frostschutz aus, sind einfach herstellbar und lagerstabil bereitstellbar. Aufgrund des geringen Massenanteils an Benzotriazol ist zudem eine hohe Umweltverträglichkeit gesichert.

### Beispiele

Nachstehende Tabelle offenbart Beispiele, die die vorliegende Erfindung veranschaulichen, jedoch die Erfindung nicht darauf beschränken sollen. Hierbei sind die angegebenen Komponenten in Massenanteilen (%), jeweils bezogen auf die Gesamtmasse des Frostschutzmittels, angegeben.

| Beispiel/Komponenten | 1 | 2 | 3 | 4 | 5 | 6 | 7 | 8 | Vgl.1 | Vgl.2 |
|---|---|---|---|---|---|---|---|---|---|---|
| VE-Wasser | auf 100 % | auf 100 % | auf 100 % | auf 100 % | auf 100 % | auf 100 % | auf 100 % | auf 100 % | auf 100 % | auf 100 % |
| KOH (45 Masse%-ig in Wasser) | 39,3 | 52,4 | 39,9 | 39,2 | 39,0 | 52,1 | 52,4 | 52,1 | 39,2 | 39,2 |
| Bernsteinsäure | 18,5 | 24,6 | 18,5 | 18,5 | 18,5 | 24,6 | 24,6 | 24,6 | 18,5 | 18,6 |
| Benzotriazol | 0,05 | 0,05 | 0,05 | 0,05 | 0,05 | 0,05 | 0,05 | 0,05 | 0,05 | - |
| Zimtsäure | - | - | 0,44 | 0,44 | 0,074 | 0,074 | - | 0,074 | - | 0,44 |
| pH-Wert | 10,5 | 10,5 | 8,6 | 10,7 | 10,6 | 10,6 | 10,5 | 10,6 | 8,7 | 8,7 |
| Frostschutz [°C] | -16 | -29 | -16 | -16 | -16 | -29 | -29 | -29 | -16 | -16 |
| Testtem peratu r [°C] | 10 | 10 | 10 | 10 | 10 | 10 | -29 | -29 | 10 | 10 |
| Abtrag Lot [mg] | 28,8 | 37,5 | 16,0 | 15,6 | 17,6 | 27,4 | 3,9 | 3,5 | 46,6 | 40,2 |

Zur Herstellung der Frostschutzmittel wurde das VE-Wasser in einem Becherglas vorgelegt, anschließend die 45%ige (Masse%) wässrige KOH-Lösung zugegeben und dann nach und nach die Bernsteinsäure, die Zimtsäure und das Benzotriazol unter Rühren zugefügt, bis eine homogene Lösung erhalten wurde.

Die Versuchsbedingungen zur Bestimmung des Abtrags von Lot waren an ASTM-D 1384 aus dem Jahr 2012 angelegt, wobei die bei einer Testtemperatur von 10 °C verwendeten Frostschutzmittel gerührt wurden und die bei einer Testtemperatur von -29 °C verwendeten Frostschutzmittel nicht gerührt wurden. Es wurden nachfolgende Metalle getestet: Aluminium, Kupfer, Messing, Grauguss, Stahl und Lot, wobei die Werte des Abtrags für Lot in oben dargestellter Tabelle aufgeführt sind. Die Abtragswerte für die übrigen Metalle waren allesamt gering.

Ein Vergleich von Beispiel 1 mit Vergleichsbeispiel 1 zeigt, dass bei einem Frostschutzmittel, das Bernsteinsäure, KOH und Benzotriazol enthält, ein pH-Wert von 10,4 bis 10,8 notwendig ist, um einen Abtrag von Lot von weniger als 30 mg zu erzielen, wie gemäß ASTM D-3306 aus dem Jahr 2014 gefordert. Dies gilt sowohl für einen auf eine Temperatur von -16 °C als auch auf eine Temperatur von -29 °C eingestellten Frostschutz. Beispiel 7 zeigt zudem, dass diese vorteilhaften Effekte auch bei einer Testtemperatur von -29 °C erzielt werden.

Ein Vergleich von Beispiel 1 mit Beispiel 3 zeigt, dass durch den Zusatz von Zimtsäure selbst bei niedrigem pH-Wert von 8,6, wie er beispielsweise in etwa auch in Vergleichsbeispiel 1 vorliegt, ein verbesserter Korrosionsschutz für Lot erzielt werden kann. Wie ein Vergleich von Beispiel 3 mit Beispiel 4 zeigt, kann durch Anheben des pH-Wertes bei sonst gleicher Zusammensetzung des Zimtsäure enthaltenden Frostschutzmittels ein geringfügig besserer Korrosionsschutz von Lot erhalten werden.

Ein Vergleich der Beispiele 3 und 4 mit Beispiel 5 zeigt zudem, dass durch Anhebung des pH-Wertes auf 10,6 des Zimtsäure enthaltenden Frostschutzmittels ein Massenanteil an Zimtsäure um etwa 80% gesenkt werden kann, ohne eine wesentliche Verschlechterung des Korrosionsschutzes von Lot zu bewirken. Dies gilt insbesondere für einen auf -16 °C eingestellten Frostschutz, jedoch ist auch ein Korrosionsschutz eines auf eine Frostschutztemperatur von -29 °C eingestellten Frostschutzmittels, wie es Beispiel 6 zeigt, immer noch sehr gut im Vergleich zu den Vergleichsbeispielen. Dies gilt auch für eine Testtemperatur von -29 °C (siehe Beispiel 8).

Ein Vergleich von Beispiel 1 mit Vergleichsbeispiel 2 zeigt zudem die synergistische Wirkung einer Kombination von Zimtsäure und Benzotriazol im Hinblick auf eine korrosionsinhibierende Wirkung für Lot.

Ein Vergleich der Beispiele 2 und 7 zeigt, dass selbst bei einer Testtemperatur von -29 °C ein sehr niedriger Wert des Abtrags von Lot erzielt werden konnte, wenn das Frostschutzmittel Benzotriazol, Bernsteinsäure und KOH aufwies, wobei ein pH-Wert zwischen 10,4 und 10,5 lag. Ein ähnliches Ergebnis lässt sich bei einem Vergleich der Beispiele 6 und 8 erkennen, wobei Beispiele 6 und 8 Zimtsäure enthaltende Frostschutzmittel sind und einen pH-Wert von 10,7 aufwiesen, wobei der Massenanteil an Zimtsäure gegenüber Beispiel 4 um 80 % reduziert war.

## Patentansprüche

1. Frostschutzmittel enthaltend:
- Bernsteinsäure,
- Benzotriazol und
- KOH,
wobei ein pH-Wert des Frostschutzmittels 10,4 bis 10,8 beträgt oder enthaltend
- Bernsteinsäure,
- Zimtsäure
- Benzotriazol und
- KOH,
wobei ein pH-Wert des Frostschutzmittels 8,5 bis 10,8 beträgt.

2. Frostschutzmittel nach Anspruch 1 enthaltend:
- Bernsteinsäure,
- Zimtsäure
- Benzotriazol und
- KOH,
wobei ein pH-Wert des Frostschutzmittels 10,4 bis 10,8 beträgt.

3. Frostschutzmittel nach Anspruch 1 oder 2, wobei ein Massenanteil an Bernsteinsäure, bezogen auf die Gesamtmasse des Frostschutzmittels, 10 % bis 31 % beträgt.

4. Frostschutzmittel nach einem der vorhergehenden Ansprüche, wobei ein Stoffmengenverhältnis von Bernsteinsäure zu KOH mindestens 1 : 2 beträgt.

5. Frostschutzmittel nach einem der vorhergehenden Ansprüche, wobei ein Massenverhältnis von Zimtsäure zu Benzotriazol 1,5 : 1 bis 9 : 1 beträgt.

6. Frostschutzmittel nach einem der vorhergehenden Ansprüche, wobei ein Massenanteil an Benzotriazol, bezogen auf die Gesamtmasse des Frostschutzmittels, weniger als 0,1 %, insbesondere 0,05 %, beträgt.

7. Frostschutzmittel nach einem der vorhergehenden Ansprüche, wobei ein Massenanteil an Zimtsäure, bezogen auf die Gesamtmasse des Frostschutzmittels, 0,05 % bis 0,6 %, insbesondere 0,07 % bis 0,5 %, beträgt.

8. Frostschutzmittel nach einem der vorhergehenden Ansprüche, wobei ein Frostschutz des Frostschutzmittels -5 °C bis -50 °C, insbesondere -10 °C bis -29 °C, beträgt.

9. Frostschutzmittel nach einem der vorhergehenden Ansprüche, ferner enthaltend Wasser, insbesondere vollentsalztes Wasser, wobei ein Massenanteil des Wassers, bezogen auf eine Gesamtmasse des Frostschutzmittels, 20 % bis 50 % beträgt.

10. Frostschutzmittel nach einem der vorhergehenden Ansprüche, **dadurch gekennzeichnet, dass** das Frostschutzmittel frei ist von einwertigen und mehrwertigen Alkoholen.

11. Frostschutzmittel nach Anspruch 1 enthaltend oder bestehend aus:
- Bernsteinsäure: 15 bis 20 Masse%, insbesondere 18,5 % Masse%,
- Benzotriazol: 0,3 bis 0,7 Masse%, insbesondere 0,05 Masse%, und
- KOH: 37 bis 41 Masse%, insbesondere 39,3 Masse%, und
- Wasser, insbesondere vollentsalztes Wasser,
wobei ein pH-Wert des Frostschutzmittels 10,5 bis 10,7, insbesondere 10,5, beträgt.

12. Frostschutzmittel nach Anspruch 1 enthaltend oder bestehend aus:
- Bernsteinsäure: 15 bis 20 Masse%, insbesondere 18,5 % Masse%,
- Benzotriazol: 0,3 bis 0,7 Masse%, insbesondere 0,05 Masse%,
- KOH: 38 bis 43 Masse%, insbesondere 41,8 Masse%,
- Zimtsäure: 0,05 Masse% bis 0,6 Masse%, insbesondere 0,44 Masse% und
- Wasser, insbesondere vollentsalztes Wasser,
wobei ein pH-Wert des Frostschutzmittels 10,5 bis 10,7, insbesondere 10,7, beträgt.
